# EUROPÄISCHE PATENTSCHRIFT

(11) **EP 2 510 771 B1**
(45) Veröffentlichungstag und Bekanntmachung des Hinweises auf die Patenterteilung: **18.06.2014**
(21) Anmeldenummer: 12401054.7
(22) Anmeldetag: 02.04.2012
(51) Int. Cl.: A01D 34/49

(54) **Mäh- und/oder Vertikutiermaschine**
Mowing and/or verticutting machine
Tondeuse et/ou scarificateur

(30) Priorität: 14.04.2011 DE 102011002036
(43) Veröffentlichungstag der Anmeldung: 17.10.2012
(73) Patentinhaber: Amazonen-Werke H. Dreyer GmbH & Co. KG, 49205 Hasbergen (DE)
(72) Erfinder: Klein, Laurent, 57910 Hambach (FR); Schomäker, Wilfried, 26160 Bad Zwischenahn (DE)

(56) Entgegenhaltungen:
- EP-A1- 0 685 148
- DE-A1- 19 607 350
- DE-A1-102005 006 523

## Beschreibung

Die Erfindung betrifft eine Mäh- und/oder Vertikutiermaschine gemäß des Oberbegriffes des Patentanspruches 1.

Eine derartige Mäh- und/oder Vertikutiermaschine ist durch die DE 10 2005 006 523 A1 bekannt. Bei dieser Mäh- und/oder Vertikutiermaschine ist die Schneckenwelle mittels eines Verbindungselementes mit der motorisch angetriebenen Antriebswelle gekuppelt. Dieses Verbindungselement ist in der Praxis als eine über beide Wellen gestülpte Hülse ausgebildet, welche formschlüssig mit beiden Wellen verbunden ist, um die Drehbewegung kraft- und formschlüssig zu übertragen. Dieses Verbindungselement schafft nicht immer eine ausreichend feste Verbindung zwischen den beiden Wellen. Weiterhin ist aufgrund der Ausgestaltung des Verbindungselementes das Lösen der Schneckenwelle von der Antriebswelle zu Reparaturzwecken und/oder Wartungszwecken relativ aufwändig.

Der Erfindung liegt die Aufgabe zu Grunde, ein Verbindungselement zum Verbinden der beiden Wellen miteinander zu schaffen, welches einerseits einfach ausgestaltet ist und andererseits eine sichere Verbindung der beiden Wellen miteinander gewährleistet.

Diese Aufgabe wird erfindungsgemäß dadurch gelöst, dass das Verbindungselement als kombinierte Konus- und Schraubverbindung ausgebildet ist. Infolge dieser Maßnahme ergibt sich über das erfindungsgemäße ausgestaltete Verbindungselement, dass durch die Konusverbindung eine sehr genaue Justierung der Wellen zueinander erfolgt. Weiterhin wird durch die kombinierte Konus- und Schraubverbindung eine gute Kraftübertragung erreicht.

Eine einfache Ausgestaltung der kombinierten Konus- und Schraubverbindung, lässt sich dadurch erreichen, dass die Konus- und Schraubverbindung einen Außenkonus auf der Antriebswelle und einen Innenkonus in der Schneckenwelle aufweist.

Ein einfacher Aufbau der kombinierten Konus- und Schraubverbindung, ergibt sich dadurch, dass an dem freien Ende der Antriebswelle ein Schraubengewinde der Schraubverbindung dem Außenkonus sich anschließend zugeordnet ist.

In einer Ausführungsform ist vorgesehen, dass die Antriebswelle aus einem Getriebegehäuse herausragt.

In einer anderen Ausführungsform ist vorgesehen, dass die Antriebswelle aus einem Gehäuse eines Hydraulikmotors herausragt.

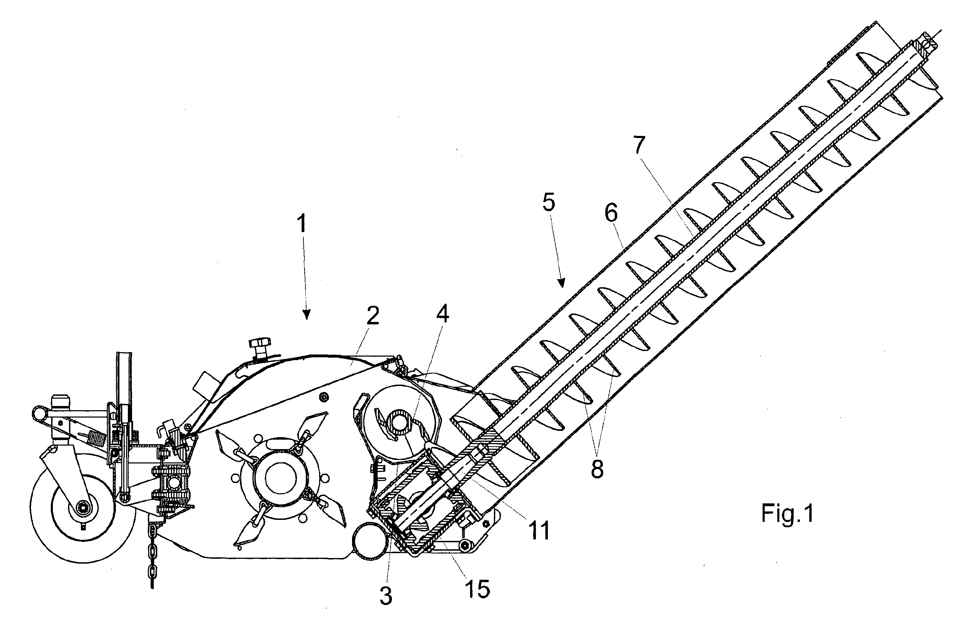

Weitere Einzelheiten der Erfindung sind der Beispielsbeschreibung und den Zeichnungen zu entnehmen.
Hierbei zeigen
- Fig. 1: die Mäh- und/oder Vertikutiereinrichtung der Mäh- und/oder Vertikutiermaschine in Seitenansicht, Teilschnitt und in Prinzipdarstellung und

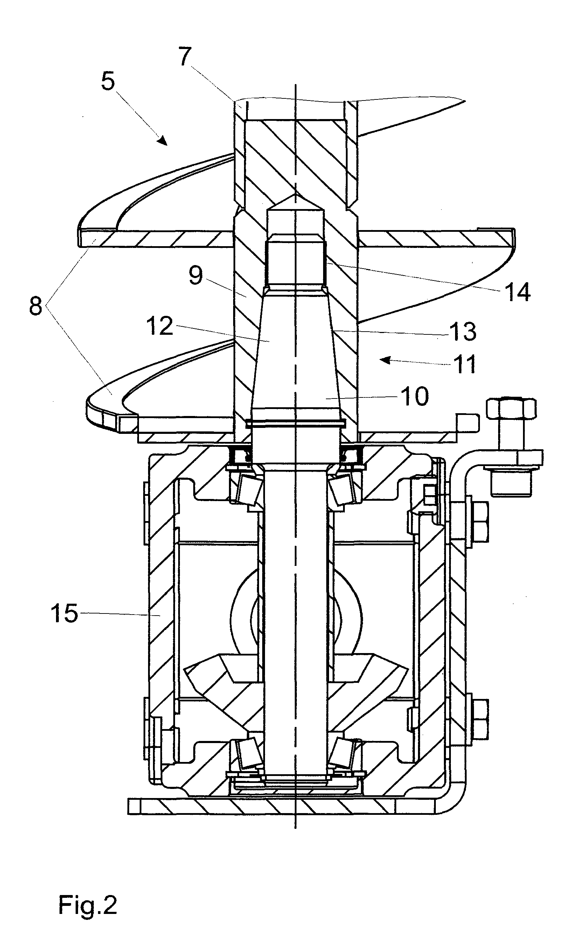

- Fig. 2: die Verbindung der Antriebswelle und der Schneckenwelle mittels des erfindungsgemäßen Verbindungselementes im Schnitt und in einem vergrößerten Maßstab.

Die Mäh- und/oder Vertikutiermaschine ist ein vielseitiges Gerät und lässt sich neben dem Mähen von Grünflächen auch als Vertikutier- und Aufsammelgerät einsetzen. Die Maschine weist ein nicht dargestelltes Fahrwerk mit den angetriebenen Vorderrädern und den hinteren Pendelrädern auf. Die Lenkung erfolgt über die angetriebenen Vorderräder. An dem Rahmen der Maschine ist auf dessen Rückseite der Sammelbehälter angeordnet. Auf der Vorderseite der Maschine ist über eine Anlenkung die als Schlegel- oder Trommelmähwerk ausgebildete Mäh- und Vertikutiereinrichtung 1 in Höhenrichtung bewegbar angeordnet. An das Gehäuse 2 der Mäh- und Vertikutiereinrichtung 1 schließt sich ein Fördertrog 3 mit der Querförderschnecke 4 an. Die Querförderschnecke 4 fördert das Gut von beiden Seiten der Längsförderschnecke 5 zu. Diese Längsförderschnecke 5 ist schräg nach hinten oben weisend angeordnet und endet in einem Sammelbehälter. Die Förderschnecke 5 weist das Förderrohr 6 und die auf der als Schneckenwellenrohr ausgebildeten Schneckenwelle 7 angeordneten Schneckengänge 8 auf. Die Förderschnecke 5 ist zweigängig ausgebildet. Die Schneckengänge 8 weisen eine Vielzahl von Schneckenwindungen auf. Die Schneckengänge 8 der Förderschnecke 5 fördern das Gut verdichtend in den Sammelbehälter, wobei die Enden der Schneckengänge 8 das Gut in den Vorratsbehälter pressen und es dort verdichten.

An dem unteren Ende 9 des Schneckenwellrohres 7 ist die Antriebswelle 10 angeordnet. Das Schneckenwellenrohr 7 ist über ein Verbindungselement 11 mit der Antriebswelle 10 gekuppelt. Das Verbindungselement 11 ist als kombinierte Konus- und Schraubverbindung ausgebildet. Die Konus- und Schraubverbindung weist einen Außenkonus 12 auf der Antriebswelle 10 und einen Innenkonus 13 in der als Schneckenrohr 7 ausgebildeten Schneckenwelle auf. An dem freien Ende der Antriebswelle 10, das heißt im Anschluss an den Außenkonus 12, ist ein Schraubengewinde der Schraubverbindung 14 sich anschließend zugeordnet. Die Antriebswelle 10 ragt aus dem Getriebegehäuse 15 heraus.

Es ist auch möglich, dass die Antriebswelle 10 aus dem Gehäuse eines Hydraulikmotors herausragt.

## Patentansprüche

1. Mäh- und/oder Vertikutiermaschine mit einer Mäh- und/oder Vertikutiereinrichtung (1), die das abgeschnittene und/oder aus dem Boden entfernte Gut einem Sammelbehälter über eine ein Förderrohr (6) und Schneckengänge aufweisende Förderschnecke (5) zuführt, wobei die die Schneckengänge tragende Schneckenwelle (7) zumindest an ihrem unteren Ende gelagert und von einer motorisch angetriebenen Antriebswelle (10) rotierend antreibbar ist, wobei die Schneckenwelle (7) mittels eines Verbindungselementes (11) mit der Antriebswelle (10) gekuppelt ist, **dadurch gekennzeichnet, dass** das Verbindungselement (11) als kombinierte Konus- und Schraubverbindung (12, 13, 14) ausgebildet ist.

2. Mäh- und/oder Vertikutiermaschine nach Anspruch 1, **dadurch gekennzeichnet, dass** die Konus- und Schraubverbindung einen Außenkonus (12) auf der Antriebswelle (10) und einen Innenkonus (13) in der Schneckenwelle (7) aufweist.

3. Mäh- und/oder Vertikutiermaschine nach zumindest einem der vorstehenden Ansprüche, **dadurch gekennzeichnet, dass** an dem freien Ende der Antriebswelle (10) ein Schraubengewinde (14) der Schraubverbindung dem Außenkonus (12) sich anschließend zugeordnet ist.

4. Mäh- und/oder Vertikutiermaschine nach zumindest einem der vorstehenden Ansprüche, **dadurch gekennzeichnet, dass** die Antriebswelle (10) aus einem Getriebegehäuse (15) herausragt.

5. Mäh- und/oder Vertikutiermaschine nach zumindest einem der vorstehenden Ansprüche, **dadurch gekennzeichnet, dass** die Antriebswelle aus einem Gehäuse eines Hydraulikmotors herausragt.

## Claims

1. Mowing and/or verticutting machine with a mowing and/or verticutting device (1) which supplies the material which has been cut off and/or removed from the ground to a collecting container via a worm conveyor (5) having a conveyor pipe (16) and worm channels, wherein the worm shaft (7) bearing the worm channels is mounted at least at the lower end thereof and is driveable in a rotating manner by a motor-driven driveshaft (10), wherein the worm shaft (7) is coupled to the drive shaft (10) by means of a connecting element (11), **characterized in that** the connecting element (11) is designed as a combined cone and screw connection (12, 13, 14).

2. Mowing and/or verticutting machine according to Claim 1, **characterized in that** the cone and screw connection has an external taper (12) on the driveshaft (10) and an internal taper (13) in the worm shaft (7).

3. Mowing and/or verticutting machine according to at least one of the preceding claims, **characterized in that** a screw thread (14) of the screw connection is assigned to the free end of the driveshaft (10) in a manner adjoining the external taper (12).

4. Mowing and/or verticutting machine according to at least one of the preceding claims, **characterized in that** the driveshaft (10) projects out of a gear housing (15).

5. Mowing and/or verticutting machine according to at least one of the preceding claims, **characterized in that** the driveshaft projects out of a housing of a hydraulic motor.

## Revendications

1. Tondeuse et/ou scarificateur doté d'un dispositif de tonte et/ou de scarification (1) amenant le bien coupé et/ou retiré du sol à un bac de collecte via une vis sans fin de transport (5) comportant un tube de transport (6) et des couloirs de vis sans fin, l'arbre de vis sans fin (7) supportant les couloirs de vis sans fin étant disposé au moins au niveau de son extrémité inférieure et étant entraîné en rotation par un arbre d'entraînement (10) entraîné de façon motorisée, l'arbre de vis sans fin (7) étant couplé à l'arbre d'entraînement (10) via un élément de jonction (11), **caractérisé en ce que** l'élément de jonction (11) prend la forme d'une jonction à cône et vis (12, 13, 14) combinée.

2. Tondeuse et/ou scarificateur selon la revendication 1, **caractérisé en ce que** la jonction à cône et vis comporte un cône extérieur (12) prévu sur l'arbre d'entraînement (10) et un cône intérieur (13) prévu dans l'arbre de vis sans fin (7).

3. Tondeuse et/ou scarificateur selon au moins l'une quelconque des revendications précédentes, **caractérisé en ce qu'**au niveau de l'extrémité libre de l'arbre d'entraînement (10), un filet de vis (14) de la jonction à vis est associé au cône extérieur (12) rattaché.

4. Tondeuse et/ou scarificateur selon au moins l'une quelconque des revendications précédentes, **caractérisé en ce que** l'arbre d'entraînement (10) ressort d'un carter de transmission (15).

5. Tondeuse et/ou scarificateur selon au moins l'une quelconque des revendications précédentes, **caractérisé en ce que** l'arbre d'entraînement ressort d'un carter de moteur hydraulique.
